# EUROPÄISCHE PATENTANMELDUNG

(11) **EP 4 599 656 A1**
(43) Veröffentlichungstag der Anmeldung: **13.08.2025**
(21) Anmeldenummer: 24156353.5
(22) Anmeldetag: 07.02.2024
(51) Int. Cl.: A01B 71/06, B60K 17/28, F16D 11/00, A01B 61/02

(54) **ZAPFWELLE UND GETRIEBEEINRICHTUNG**

(71) Anmelder: Deere & Company, Moline, IL 61265 (US)
(72) Erfinder: HITANALLI, VIRESH, 68163 Mannheim (DE); EISENHARDT, CHRISTOPH, 68163 Mannheim (DE); MAEURER, STEFAN, 68163 Mannheim (DE); VERMA, RISHI, 68163 Mannheim (DE)
(74) Vertreter: Dehnhardt, Florian Christopher

(57) **Zusammenfassung**

Die Erfindung betrifft eine Zapfwelle (10) mit einem daran lösbar fixierbaren Zapfwellenstummel (14). Der Zapfwellenstummel (14) ist in Axialrichtung (18) von einer Arretierstange (16) konzentrisch durchsetzt, welche zwischen einem den Zapfwellenstummel (14) an der Zapfwelle (10) arretierenden Arretierzustand und einem Lösezustand beweglich ist, in welchem der Zapfwellenstummel (14) von der Zapfwelle (10) gelöst ist. Die Erfindung betrifft weiter eine Getriebeeinrichtung (74), umfassend eine solche Zapfwelle (10) mit einem solchen Zapfwellenstummel (14).

## Beschreibung

Die Erfindung betrifft eine Zapfwelle mit einem daran lösbar fixierten Zapfwellenstummel. Weiterhin betrifft die Erfindung eine Getriebeeinrichtung mit einer solchen Zapfwelle.

Landwirtschaftliche Arbeitsfahrzeuge sind üblicherweise heck- und oder frontseitig mit einer Zapfwelle ausgestattet. Mit der Antriebsleistung der Zapfwelle können verschiedene Anbaugeräte, z.B. eine Ballenpresse, betrieben werden. Zur Übertragung der Antriebsleistung an das Anbaugerät kann an der Zapfwelle ein Zapfwellenstummel lösbar fixiert sein. Der Zapfwellenstummel ist oftmals über eine Gelenkwelle mit dem Anbaugerät gekoppelt.

Der vorliegenden Erfindung liegt die Aufgabe zugrunde, eine Zapfwelle und eine Getriebeeinrichtung vorzuschlagen, bei denen der Mechanismus für die lösbare Fixierung des Zapfwellenstummels an der Zapfwelle einfacher ausgestaltet ist.

Diese Aufgabe wird durch eine Zapfwelle mit den Merkmalen des Patentanspruchs 1 und durch eine Getriebeeinrichtung mit den Merkmalen des Patentanspruchs 11 gelöst.

Weitere vorteilhafte Ausgestaltungen der Erfindung gehen aus den Unteransprüchen hervor.

Gemäß Patentanspruch 1 ist eine Zapfwelle mit einem daran lösbar fixierbaren Zapfwellenstummel kombiniert. Zur Realisierung der lösbaren Fixierung ist der Zapfwellenstummel in Axialrichtung von einer Arretierstange konzentrisch durchsetzt. Dabei ist die Arretierstange axialbeweglich zwischen einem Arretierzustand und einem Lösezustand. In dem Arretierzustand bewirkt die Arretierstange eine Arretierung des Zapfwellenstummels an der Zapfwelle. In dem Lösezustand ermöglicht die Arretierstange ein Lösen des Zapfwellenstummels von der Zapfwelle. Die lösbare Fixierung wird folglich durch eine lösbare Arretierung erreicht.

Die in dem Zapfwellenstummel zentral einliegende Arretierstange ist montagetechnisch einfach handhabbar. Unterschiedliche Funktionszustände (Arretieren und Lösen) können durch einfache Axialbewegungen der Arretierstange erzielt werden. Dies unterstützt einen einfachen Aufbau des Fixier- bzw. Arretiermechanismus mit geringem Zeitaufwand für die Arretierung und das Lösen der Arretierung.

Die Arretierung wirkt insbesondere als eine in Axialrichtung und/oder in Umfangsrichtung unbewegliche Fixierung zwischen der Zapfwelle und dem Zapfwellenstummel.

Die Zapfwelle kann als eine Frontzapfwelle oder als eine Heckzapfwelle ausgebildet sein.

Vorzugsweise wirkt eine Axialbewegung der Arretierstange auf einen Arretierstift ein, welcher in einem radial ausgerichteten Stiftkanal des Zapfwellenstummels einliegt. Dabei ist der Arretierstift entlang der Radialrichtung des Zapfwellenstummels beweglich, um ein Arretieren und Lösen des Zapfwellenstummels zu bewirken. Hierdurch kann eine Axialbewegung in eine Radialbewegung umgelenkt werden, um eine Arretierung bzw. ein Lösen der Arretierung zu bewirken. Dies unterstützt einen raumsparenden Aufbau des Arretiermechanismus in Axialrichtung.

Weiter vorzugsweise wirkt die Axialbewegung der Arretierstange unmittelbar auf den Arretierstift ein, wodurch der Arretiermechanismus mit geringem Bauteileaufwand besonders kostengünstig herstellbar ist. Die Arretierstange kann beispielsweise eine im Querschnitt nach Art einer Schräge ausgebildete Mantelfläche aufweisen, welche während der Axialbewegungen der Arretierstange auf den Arretierstift einwirkt und dessen radiale Position im Stiftkanal verändern kann.

In einer alternativen Ausführungsform wirkt die Axialbewegung der Arretierstange auf einen axial gegenüberliegenden und federbelastet axialbeweglichen Arretierbolzen ein, dessen Bewegung auf den Arretierstift einwirkt. Die Federbelastung des Arretierbolzens wird vorzugsweise dazu genutzt, auf einfachen mechanischen Mitteln eine ausreichende Arretierkraft zu generieren und auch ein versehentliches Lösen der Arretierung zu vermeiden. Ein Lösen der Arretierung ist dann erst nach Überwindung der Federkraft möglich. Dies unterstützt einen zuverlässig betätigbaren Arretiermechanismus.

In einer weiteren bevorzugten Ausführungsform wirkt der Arretierstift auf einen radial beweglichen Arretierring ein, um eine lösbare Arretierung des Zapfwellenstummels an der Zapfwelle zu erzielen. Hierdurch können unterschiedliche radiale Positionen des Arretierringes mechanisch effizient für eine Arretierung und ein Lösen der Arretierung genutzt werden. Mit anderen Worten ermöglicht der Arretierring bei geringem Kraftaufwand eine effiziente Arretierfunktion. Zur beweglichen Lagerung des Arretierringes sind vorzugsweise eine Ringnut an einem radial äußeren Abschnitt des Stiftkanals und eine Gegenringnut an der Zapfwelle vorgesehen. In dem Arretierzustand der Arretierstange können die Ringnut und die Gegenringnut derart miteinander zusammenwirken, dass sie gemeinsam den radial beweglichen Arretierring aufnehmen. Außerhalb des Arretierzustandes der Arretierstange kann der Arretierring in eine Ausgangsstellung zurückkehren und dabei abhängig von seiner technischen Ausführungsform entweder in der Ringnut des Zapfwellenstummels oder in der Gegenringnut der Zapfwelle einliegen und dort gelagert sein.

Für die gewünschte Arretierung und deren Lösen ist der Arretierring vorzugsweise als ein in sich nicht-geschlossenes ringartiges Bauteil mit zwei Ringenden ausgebildet. Beispielsweise ist dieses Bauteil ein Schnappring, Sicherungsring oder Sprengring. Somit ist das Bauteil bzw. der Arretierring dazu geeignet, effizient radiale Kräfte zu generieren, welche eine zuverlässige Arretierfunktion unterstützen.

Vorteilhaft ist der Arretierstift kostengünstig als eine, insbesondere handelsübliche, Schraube ausgebildet, deren Schraubenkopf radial außen angeordnet ist. Dabei kann der Schraubenkopf innerhalb des Stiftkanals oder in der sich daran anschließenden Ringnut angeordnet sein. Über den Schraubenkopf können Arretierkräfte effizient übertragen werden.

Eine mechanisch stabile Arretierung kann unterstützt werden, indem der Zapfwellenstummel vorzugsweise zwei radial gegenüberliegende Stiftkanäle für jeweils einen Arretierstift aufweist.

In einer vorteilhaften Ausführungsform weist die Arretierstange ein Stangenfreiende mit einem Arretier-Außengewinde auf, welches mit der Zapfwelle verschraubbar ist. Hierbei sind die Zapfwelle und die Arretierstange konstruktionstechnisch vorzugsweise derart aufeinander abgestimmt, dass allein durch die vorgenannte Verschraubung der Zapfwellenstummel an der Zapfwelle arretiert ist. Wird diese Verschraubung gelöst, ist auch die Arretierung wieder aufgehoben. Bei dieser Ausführungsform der Arretierung kann auf zusätzlichen Konstruktions- und Bauteileaufwand, wie z.B. der Arretierstift, Stiftkanal, Arretierring, kostensparend verzichtet werden.

Vorteilhaft weist ein axialer Endabschnitt der Zapfwelle einen U-förmigen Querschnitt auf, dessen Innenmantel derart dimensioniert ist, dass zumindest in dem Arretierzustand an mindestens einer Axialstelle des Innenmantels eine formschlüssige Verbindung des Innenmantels mit einem Außenmantel des Zapfwellenstummels gebildet ist. An dieser mindestens einen Axialstelle sind exakt zueinander passende Durchmesser des vorgenannten Innenmantels und Außenmantels vorhanden. Hierdurch können radiale Lasten verbessert aufgenommen werden. Auch können herkömmliche Verzahnungsverbindungen zwischen dem U-förmigen Zapfwellen-Endabschnitt und dem Zapfwellenstummel sowie der Verschleiß einer derartigen Verzahnungsverbindung vermieden werden.

Weiter vorteilhaft weist ein axialer Endabschnitt der Zapfwelle einen U-förmigen Querschnitt auf, wobei zumindest in dem Arretierzustand zwischen einem Innenmantel des U-förmigen Querschnitts und einem Außenmantel des Zapfwellenstummels ein Dichtungsring gelagert ist. Der Dichtungsring kann außerhalb des Arretierzustands in einer Ringnut des vorgenannten Innenmantels oder in einer Ringnut des vorgenannten Außenmantels gelagert sein. Der Dichtungsring kann die Bereiche zwischen dem vorgenannten Innenmantel und Außenmantel wirksam gegen Verschmutzungen (z.B. infolge eines landwirtschaftlichen Arbeitseinsatzes der Zapfwelle) schützen. Insbesondere können hierdurch an dem vorgenannten Innen- und Außenmantel vorhandene Verzahnungen gegen Verschmutzungen geschützt werden. Der Dichtungsring ist vorzugsweise in sich geschlossen ausgebildet, z.B. in Form eines O-Rings.

Die Erfindung betrifft weiter eine Getriebeeinrichtung mit einer Zapfwelle und einem daran lösbar fixierten Zapfwellenstummel nach einem der Ansprüche 1 bis 10. Diese Getriebeeinrichtung wird vorteilhaft in einem Nutzfahrzeug, z.B. eine Baumaschine oder in der Land- oder Forstwirtschaft, eingesetzt. Insbesondere wird die Getriebeeinrichtung in einem Traktor verwendet. Die Getriebeeinrichtung wird üblicherweise über einen Antriebsmotor (z.B. Verbrennungsmotor) des Nutzfahrzeugs angetrieben, wobei die in die Getriebeeinrichtung eingehende Antriebskraft teilweise oder vollständig an die Zapfwelle übertragen werden kann. Die erfindungsgemäße Getriebeeinrichtung weist die oben beschriebenen Vorteile der erfindungsgemäßen Zapfwelle auf.

Vorzugsweise ist in Axialrichtung außerhalb der Zapfwelle eine Sensorik angeordnet zur Erfassung einer den Zapfwellenstummel repräsentierenden Information oder physikalischen Größe. Beispielsweise kann die Sensorik außerhalb der Zapfwelle angeordnete Zähne einer Außenverzahnung des Zapfwellenstummels erfassen. Daraus kann mit geringem technischen Aufwand z.B. eine Geschwindigkeit bzw. Drehzahl des Zapfwellenstummels und/oder der Zapfwelle abgeleitet werden. Auch ein Typ des Zapfwellenstummels kann mittels der Sensorik detektiert werden.

In einer bevorzugten Ausführungsform der Getriebeeinrichtung ist die Zapfwelle wahlweise über eine von mehreren Gangstufen antreibbar, wobei eine Gangstufe durch eine axiale Verschiebung einer an einer Antriebswelle (insbesondere drehfest) gelagerten Schaltmuffe wählbar ist, welche mit einem in Axialrichtung der Antriebswelle antreibbaren Antriebselement bewegungsverbunden ist. Hierdurch ist die Voraussetzung für eine komfortabel schaltbare Getriebeeinrichtung mit mehreren Zapfwellengängen geschaffen.

Vorteilhaft ist das Antriebselement als ein in einem Hohlraum der Antriebswelle axialbeweglich gelagerter Antriebskolben ausgebildet. Dies unterstützt einen reduzierten Bauteileaufwand und einen raumsparenden Aufbau der Getriebeeinrichtung.

Vorzugsweise ist das Antriebselement in Axialrichtung entgegen einer Federkraft durch einen Hydraulikdruck eines Hydraulikmediums (z.B. Öl) druckbeaufschlagbar. Durch den Federdruck einerseits und den Hydraulikdruck andererseits können sehr komfortabel unterschiedliche Antriebspositionen des Antriebselements erzielt werden, um die Schaltmuffe in entsprechend unterschiedliche Schaltpositionen zu überführen. Eine Gangstufe kann dann durch einfaches Betätigen eines Betätigungselements (z.B. Druck- oder Schaltknopf) aktiviert werden, indem diese Betätigung den zum Gangschalten erforderlichen Hydraulikdruck bzw. Schaltdruck bewirkt. Eine erneute Betätigung desselben Betätigungselements oder die Betätigung eines anderen geeigneten Betätigungselements kann einen Abbau des Hydraulikdrucks bzw. Schaltdrucks bewirken. Herkömmliche mechanische Verbindungen wie etwa ein manueller Schalthebel, Schaltgabeln und Schaltstangen zur Aktivierung unterschiedlicher Gangstufen können hierdurch bauteilesparend vermieden werden. Außerdem kann mit dieser hydraulischen Ansteuerung die Schaltzeit verkürzt werden.

In einer alternativen Ausführungsform ist die Getriebeeinrichtung mit mindestens einem der vorgenannten Merkmale unabhängig von der Art der verwendeten Zapfwelle ausgebildet. Mit anderen Worten ist diese alternative Getriebeeinrichtung mit einer beliebigen Zapfwelle ausgestattet. Diese Alternative ist unabhängig davon, ob die beliebige Zapfwelle die offenbarte lösbare Fixierung bzw. Arretierung mit einem Zapfwellenstummel ermöglicht oder nicht.

Die erfindungsgemäße Zapfwelle und Getriebeeinrichtung werden im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine teilweise geschnittene Seitenansicht der erfindungsgemäßen lösbaren Arretierung zwischen einer Zapfwelle und einem Zapfwellenstummel in einem ersten Ausführungsbeispiel, und
- Fig. 2: eine teilweise geschnittene Seitenansicht der erfindungsgemäßen lösbaren Arretierung zwischen einer Zapfwelle und einem Zapfwellenstummel in einem weiteren Ausführungsbeispiel, und
- Fig. 3: die Zapfwelle und der Zapfwellenstummel gemäß Fig. 2 in einem nicht-arretierten Zustand, und
- Fig. 4: eine teilweise geschnittene Seitenansicht der erfindungsgemäßen lösbaren Arretierung zwischen einer Zapfwelle und einem Zapfwellenstummel in einem weiteren Ausführungsbeispiel, und
- Fig. 5: eine geschnittene Seitenansicht mit einem Ausschnitt der erfindungsgemäßen Getriebeeinrichtung zum Antrieb einer Zapfwelle.

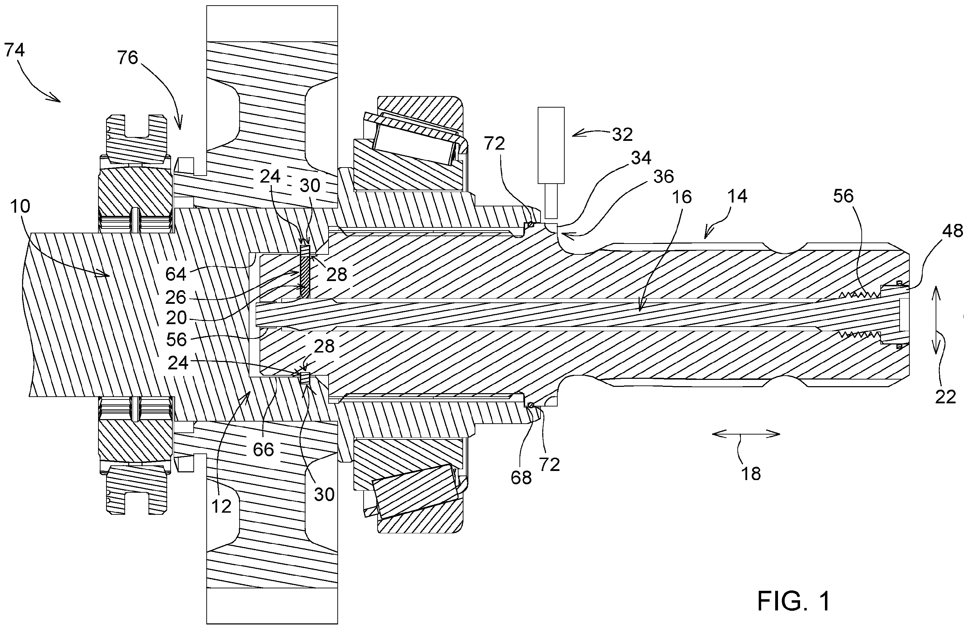

Fig. 1 zeigt eine Zapfwelle 10, deren sichtbarer axialer Endabschnitt 12 einen etwa U-förmigen Querschnitt aufweist und in diesem Bereich einen lösbar fixierten bzw. arretierten Zapfwellenstummel 14 aufnimmt. Der Zapfwellenstummel 14 ist von einer Arretierstange 16 konzentrisch bzw. koaxial durchsetzt, welche zwischen einem Arretierzustand und einem Lösezustand axial beweglich ist. In dem Arretierzustand ist der Zapfwellenstummel 14 an der Zapfwelle 10 lösbar arretiert, während diese Arretierung in dem Lösezustand wieder gelöst ist.

In Fig. 1 ist der Arretierzustand dargestellt. Hierbei hat eine durch eine Verschraubung 56 in dem Zapfwellenstummel 14 geführte Axialbewegung der Arretierstange 16 entlang einer Axialrichtung 18 unmittelbar auf einen Arretierstift 20 derart eingewirkt, dass letzterer in einer Radialrichtung 22 radial nach außen bewegt wurde und einen radial beweglichen Arretierring 24 zur Arretierung des Zapfwellenstummels 14 beaufschlagt.

Der Arretierstift 20 liegt in einem radial ausgerichteten Stiftkanal 26 des Zapfwellenstummels 14 ein und ist entlang der Radialrichtung 22 für ein Arretieren und Lösen des Zapfwellenstummels 14 bezüglich der Zapfwelle 10 beweglich.

Für eine stabile Lagerung des Arretierringes 24 mündet ein radial äußerer Abschnitt des Stiftkanals 26 in eine Ringnut 28 des Zapfwellenstummels 14. In dem Arretierzustand des Zapfwellenstummels 14 und der Arretierstange 16 wirkt die Ringnut 28 mit einer Gegenringnut 30 der Zapfwelle 10 derart zusammen, dass die Ringnut 28 und die Gegenringnut 30 gemeinsam den Arretierring 24 aufnehmen.

Während der radial bewegliche Arretierring 24, z.B. ein Schnappring, Sicherungsring oder Sprengring, in dem Arretierzustand von der Ringnut 28 und der Gegenringnut 30 gemeinsam aufgenommen wird, ist der Arretierring 24 außerhalb des Arretierzustands in einer der beiden Nuten 28, 30 gelagert. Vorzugsweise ist der Arretierring 24 dabei in der Ringnut 28 des Zapfwellenstummels 14 gelagert.

In Fig. 1 ist außerdem eine Sensorik 32 dargestellt, welche in Axialrichtung 18 außerhalb der Zapfwelle 10 angeordnet ist zur Erfassung einer den Zapfwellenstummel 14 repräsentierenden Information oder physikalischen Größe. Insbesondere erfasst die Sensorik zumindest teilweise außerhalb der Zapfwelle 10 angeordnete Zähne 34 einer Außenverzahnung 36 des Zapfwellenstummels 14. Daraus kann mit geringem technischen Aufwand z.B. eine Geschwindigkeit bzw. Drehzahl des Zapfwellenstummels 14 und/oder der Zapfwelle 10 abgeleitet werden. Auch ein Typ des Zapfwellenstummels 14 kann mittels der Sensorik 32 erkannt werden.

Die Sensorik 32 ist zwar in den weiteren Ausführungsformen nicht dargestellt, kann jedoch gleichwohl auch dort mit der Zapfwelle 10 und dem Zapfwellenstummel 14 kombiniert sein.

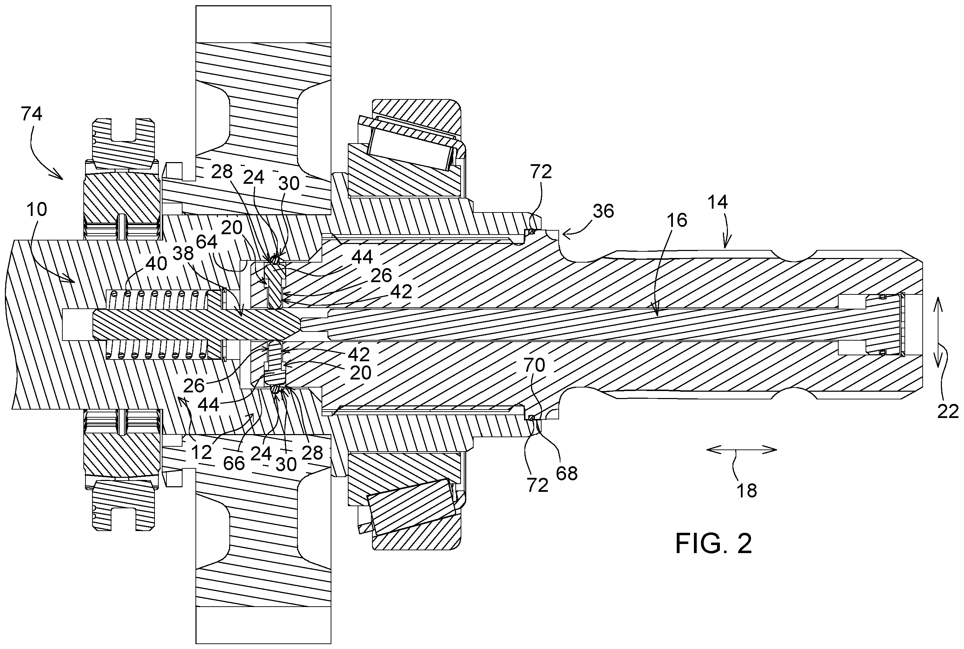

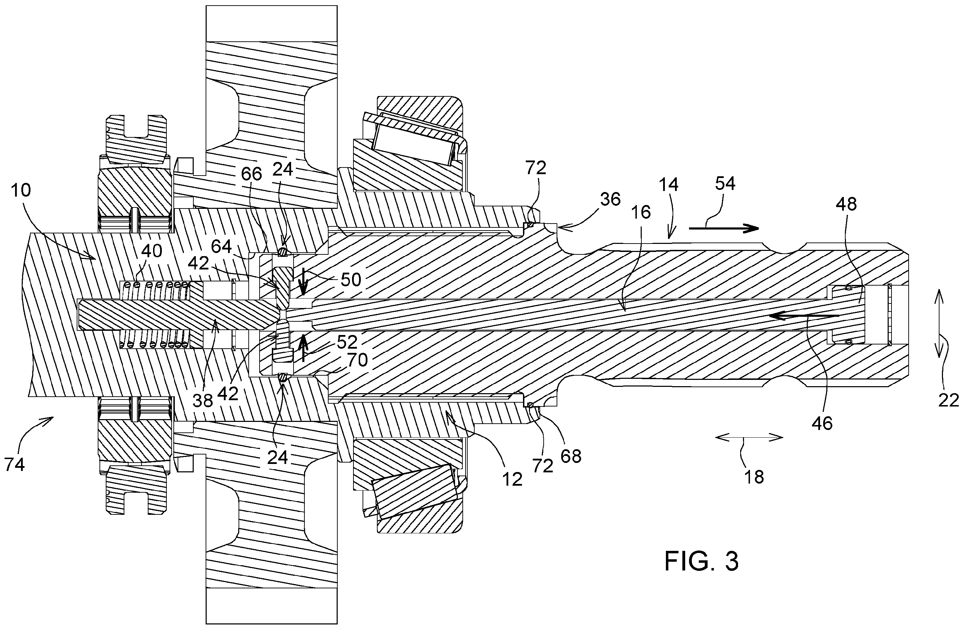

Fig. 2 zeigt eine weitere Ausführungsform des Arretiermechanismus. Hierbei wirkt eine Axialbewegung der Arretierstange 16 auf einen axial gegenüberliegenden Arretierbolzen 38 ein. Der Arretierbolzen 38 ist mittels einer Druckfeder 40 federbelastet und axial beweglich in der Zapfwelle 10 gelagert. Eine federbelastete Axialbewegung des Arretierbolzens 38 wirkt auf den Arretierstift 20 ein, welcher in Fig. 2 und in Fig. 3 als eine Schraube 42 ausgebildet ist, deren Schraubenkopf 44 radial außen angeordnet ist. Der Schraubenkopf 44 wiederum beaufschlagt den Arretierring 24, welcher in Fig. 2 (Arretierzustand) in dem gemeinsamen Aufnahmeraum zwischen der Ringnut 28 und der Gegenringnut 30 einliegt.

Bei der Ausführungsform gemäß Fig. 2 weist der Zapfwellenstummel 14 zwei radial gegenüberliegende Stiftkanäle 26 für jeweils einen Arretierstift 20 in Form der Schraube 42 auf.

In Fig. 3 ist der Ablauf eines Lösens der Arretierung gemäß Fig. 2 erkennbar. Zunächst wird die Arretierstange 16 axial gegen den Arretierbolzen 38 bewegt (erster Pfeil 46). Dies kann über einen Kraftangriff an einem Stangenkopf 48 der Arretierstange 16 erfolgen. Hierdurch wird der Arretierbolzen 38 entgegen der Federkraft der Druckfeder 40 soweit zurückbewegt, bis die Arretierstifte 20 bzw. Schrauben 42 radial nach innen bewegt werden können (zweiter Pfeil 50, dritter Pfeil 52). Diese Radialbewegung der Arretierstifte 20 wird vorzugsweise durch eine Rückstellkraft des Arretierringes 24 unterstützt, welcher in eine Ausgangsstellung zurückwandert, insbesondere in die Ringnut 28 des Zapfwellenstummels 14 als Ausgangsstellung zurückwandert. Die Variante eines Zurückwanderns des Arretierringes 24 in die Ringnut 28 ist in Fig. 3 nicht dargestellt. Wenn sich der Arretierring 24 in seiner Ausgangsstellung befindet, kann der Zapfwellenstummel 14 aus dem Endabschnitt 12 der Zapfwelle 10 axial entnommen werden (vierter Pfeil 54).

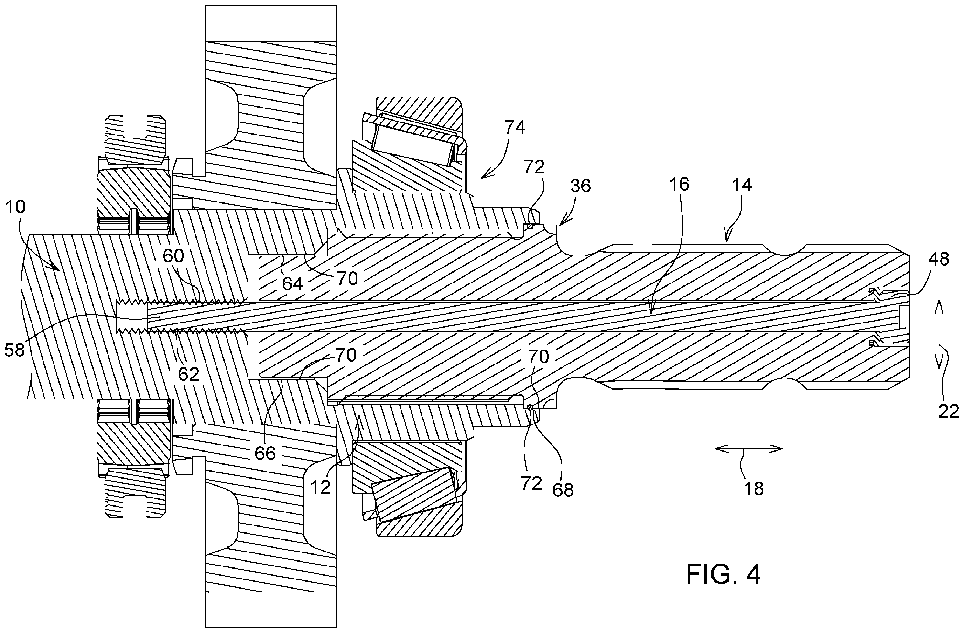

In Fig. 4 ist eine weitere Ausführungsform des Arretiermechanismus erkennbar. Dabei weist die Arretierstange 16 ein Stangenfreiende 58 mit einem Arretier-Außengewinde 60 auf, welches mit einem Innengewinde 62 der Zapfwelle 10 lösbar verschraubt ist.

Bei den verschiedenen Ausführungsformen weist der U-förmige Bereich des Endabschnitts 12 der Zapfwelle 10 einen Innenmantel 64 auf, welcher derart dimensioniert ist, dass zumindest in dem Arretierzustand an mindestens zwei Axialstellen 66, 68 eine formschlüssige Verbindung mit einem Außenmantel 70 des Zapfwellenstummels 14 gebildet ist.

Außerdem ist zwischen dem Innenmantel 64 und dem Außenmantel 70 zumindest in dem Arretierzustand ein Dichtungsring 72, z.B. in Form eines O-Ringes, gelagert. Der Dichtungsring 72 kann außerhalb des Arretierzustands in einer Ringnut der Zapfwelle 10 oder in einer Ringnut des Zapfwellenstummels 14 gelagert sein.

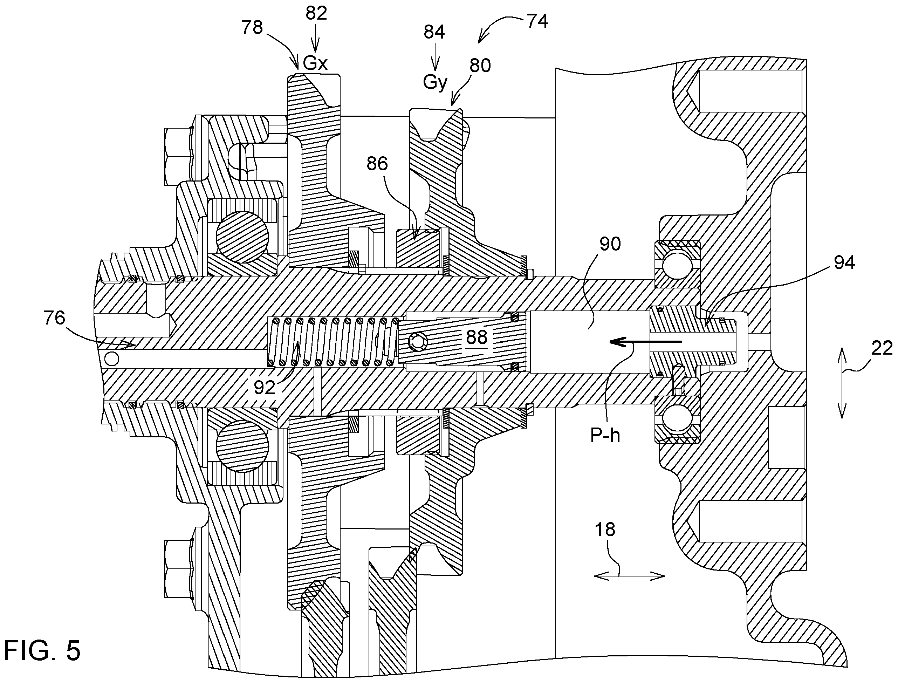

Die Zapfwelle 10 und der Zapfwellenstummel 14 sind vorzugsweise Bestandteil einer Getriebeeinrichtung 74. In Fig. 5 ist eine Ausführungsform der Getriebeeinrichtung 74 ausschnittsweise dargestellt. Sie enthält u.a. eine Antriebswelle 76, welche ihre eingehende Antriebsleistung beispielsweise über einen Antriebsmotor eines landwirtschaftlichen Nutzfahrzeugs, insbesondere eines Traktors, erhält.

An der Antriebswelle 76 sind Zahnräder 78, 80 zweier Radsätze 82, 84 gelagert, welche jeweils einer Gangstufe Gx oder Gy zugeordnet sind. Je nach eingelegter Gangstufe, z.B. Gx oder Gy, kann die eingehende Antriebsleistung über den Radsatz 82 oder über den Radsatz 84 an die Zapfwelle 10 weitergegeben werden.

Um eine andere Gangstufe einzulegen, wird eine an der Antriebswelle 76 insbesondere drehfest gelagerte Schaltmuffe 86 axial verschoben und mit dem Zahnrad 78 oder 80 in drehfesten Eingriff gebracht. Die axiale Verschiebung der Schaltmuffe 86 erfolgt durch ein Antriebselement 88, welches mit der Schaltmuffe 86 in geeigneter technischer Weise bewegungsverbunden ist. Das Antriebselement 88 ist als ein in einem hohlzylindrischen Kanal 90 der Antriebswelle 76 axialbeweglich gelagerter Antriebskolben ausgebildet. Das Antriebselement 88 ist in Axialrichtung 18 entgegen einer Federkraft eines Federelements 92 durch einen Hydraulikdruck druckbeaufschlagbar. Insbesondere wird hierdurch die Gangstufe Gx eingelegt. Sobald der Hydraulikdruck ausreichend abfällt, kann insbesondere die Gangstufe Gy eingelegt werden. Der Hydraulikdruck P-h wird über ein Hydraulikmedium (z.B. Öl) generiert, welches durch einen Hydraulikanschluss 94 in den Kanal 90 hineinfließt.

Es sei hier betont, dass die anhand der Fig. 5 offenbarten Merkmale nicht notwendigerweise mit der offenbarten Zapfwelle 10 und dem offenbarten Zapfwellenstummel 14 kombiniert sein müssen. Vielmehr können die in Fig. 5 dargestellten Bauteile der Getriebeeinrichtung 74 auch völlig unabhängig von der offenbarten Zapfwelle 10 und dem offenbarten Zapfwellenstummel 14 mit einer beliebigen Zapfwelle und - falls existent - einem beliebigen Zapfwellenstummel kombiniert sein.

## Patentansprüche

1. Zapfwelle mit einem daran lösbar fixierbaren Zapfwellenstummel (14), wobei der Zapfwellenstummel (14) in Axialrichtung (18) von einer Arretierstange (16) konzentrisch durchsetzt ist, welche zwischen einem den Zapfwellenstummel (14) an der Zapfwelle (10) arretierenden Arretierzustand und einem Lösezustand beweglich ist, in welchem der Zapfwellenstummel (14) von der Zapfwelle (10) gelöst ist.

2. Zapfwelle nach Anspruch 1, **dadurch gekennzeichnet, dass** eine Axialbewegung der Arretierstange (16) auf einen Arretierstift (20, 42) einwirkt, welcher in einem radial ausgerichteten Stiftkanal (26) des Zapfwellenstummels (14) einliegt und entlang der Radialrichtung (22) des Zapfwellenstummels (14) für ein Arretieren und Lösen des Zapfwellenstummels (14) beweglich ist.

3. Zapfwelle nach Anspruch 2, **dadurch gekennzeichnet, dass** die Axialbewegung der Arretierstange (16) unmittelbar auf den Arretierstift (20) einwirkt.

4. Zapfwelle nach Anspruch 2, **dadurch gekennzeichnet, dass** die Axialbewegung der Arretierstange (16) auf einen axial gegenüberliegenden und federbelastet axialbeweglichen Arretierbolzen (38) einwirkt, dessen Bewegung auf den Arretierstift (20, 42) einwirkt.

5. Zapfwelle nach einem der Ansprüche 2 bis 4, **dadurch gekennzeichnet, dass** ein radial äußerer Abschnitt des Stiftkanals (26) in eine Ringnut (28) des Zapfwellenstummels (14) mündet, welche mit einer Gegenringnut (30) der Zapfwelle (10) zusammenwirkt derart, dass in dem Arretierzustand die Ringnut (28) und die Gegenringnut (30) gemeinsam einen durch den Arretierstift (20, 42) beaufschlagbaren und radial beweglichen Arretierring (24) aufnehmen.

6. Zapfwelle nach einem der Ansprüche 2 bis 5, **dadurch gekennzeichnet, dass** der Arretierstift (20) als eine Schraube (42) ausgebildet ist, deren Schraubenkopf (44) radial außen angeordnet ist.

7. Zapfwelle nach einem der Ansprüche 2 bis 6, **dadurch gekennzeichnet, dass** der Zapfwellenstummel (14) zwei radial gegenüberliegende Stiftkanäle (26) für jeweils einen Arretierstift (20, 42) aufweist.

8. Zapfwelle nach einem der vorhergehenden Ansprüche,
**dadurch gekennzeichnet, dass** die Arretierstange (16) ein Stangenfreiende (58) mit einem Arretier-Außengewinde (60) aufweist, welches mit der Zapfwelle (10) verschraubbar ist.

9. Zapfwelle nach einem der vorhergehenden Ansprüche,
**dadurch gekennzeichnet, dass** ein axialer Endabschnitt (12) der Zapfwelle (10) einen U-förmigen Querschnitt aufweist, dessen Innenmantel (64) derart dimensioniert ist, dass zumindest in dem Arretierzustand an mindestens einer Axialstelle (66, 68) eine formschlüssige Verbindung mit einem Außenmantel (70) des Zapfwellenstummels (14) gebildet ist.

10. Zapfwelle nach einem der vorhergehenden Ansprüche,
**dadurch gekennzeichnet, dass** ein axialer Endabschnitt (12) der Zapfwelle (10) einen U-förmigen Querschnitt aufweist, wobei zumindest in dem Arretierzustand zwischen einem Innenmantel (64) des U-förmigen Querschnitts und einem Außenmantel (70) des Zapfwellenstummels (14) ein Dichtungsring (72) gelagert ist.

11. Getriebeeinrichtung mit einer Zapfwelle (10) und einem daran lösbar fixierten Zapfwellenstummel (14) nach einem der vorhergehenden Ansprüche.

12. Getriebeeinrichtung nach Anspruch 11, **dadurch gekennzeichnet, dass** in Axialrichtung (18) außerhalb der Zapfwelle (10) eine Sensorik (32) angeordnet ist zur Erfassung einer den Zapfwellenstummel (14) repräsentierenden Information.

13. Getriebeeinrichtung nach Anspruch 11 oder 12, **dadurch gekennzeichnet, dass** die Zapfwelle (10) wahlweise über eine von mehreren Gangstufen (Gx, Gy) antreibbar ist, wobei eine Gangstufe (Gx, Gy) durch eine axiale Verschiebung einer an einer Antriebswelle (76) gelagerten Schaltmuffe (86) wählbar ist, welche mit einem in Axialrichtung (18) der Antriebswelle (76) antreibbaren Antriebselement (88) bewegungsverbunden ist.

14. Getriebeeinrichtung nach Anspruch 13, **dadurch gekennzeichnet, dass** das Antriebselement (88) als ein in einem Hohlraum (90) der Antriebswelle (76) axialbeweglich gelagerter Antriebskolben ausgebildet ist.

15. Getriebeeinrichtung nach Anspruch 14, **dadurch gekennzeichnet, dass** das Antriebselement (88) in Axialrichtung (18) entgegen einer Federkraft (92) durch einen Hydraulikdruck (P-h) druckbeaufschlagbar ist.
